# EUROPÄISCHE PATENTSCHRIFT

(11) **EP 0 920 723 B1**
(45) Veröffentlichungstag und Bekanntmachung des Hinweises auf die Patenterteilung: **26.09.2001**
(21) Anmeldenummer: 98934861.0
(22) Anmeldetag: 05.06.1998
(51) Int. Cl.: H02K 5/14

(54) **ELEKTRISCHE ANTRIEBSEINHEIT**
ELECTRIC DRIVE UNIT
UNITE D'ENTRAINEMENT ELECTRIQUE

(30) Priorität: 26.06.1997 DE 19727118
(43) Veröffentlichungstag der Anmeldung: 09.06.1999
(73) Patentinhaber: ROBERT BOSCH GMBH, 70442 Stuttgart (DE)
(72) Erfinder: MICHENFELDER, Gerhard, D-77839 Lichtenau (DE); LAUK, Detlef, D-77871 Renchen (DE); FISCHER, Ernst, D-76593 Gernsbach (DE); KARCHER, Hansjörg, D-77830 Bühlertal (DE); HERP, Jürgen, D-77815 Bühl (DE); HURST, Richard, D-77656 Offenburg (DE)
(86) Internationale Anmeldenummer: DE9801532
(87) Internationale Veröffentlichungsnummer: WO9900885

(56) Entgegenhaltungen:
- EP-A- 0 282 377
- EP-A- 0 474 904
- EP-A- 0 614 251
- DE-A- 4 233 156

## Beschreibung

### Stand der Technik

Die Erfindung geht aus von einer elektrischen Antriebseinheit, insbesondere für Scheibenwischer eines Kraftfahrzeugs nach der Gattung des Patentanspruchs 1. Eine derartige Antriebseinheit ist bereits aus der DE 42 33 156 A1 bekannt, bei der jedoch der Bürstenträger über die Öffnung im Getriebegehäuse hinaussteht und von einer separaten Haube überdeckt wird.

Elektrische Antriebseinheiten gehen beispielsweise auch aus der DE 32 20 191 A1, der DE 32 35 622 A1, der DE 39 30 144 C2 sowie aus der DE 41 16 100 A1 hervor.

Problematisch bei diesen Antriebseinheiten ist die verhältnismäßig aufwendige und daher auch kostspielige Montage einer Vielzahl von separaten Einzelteilen. Es sind hierbei für die Montage der verschiedenen vorgefertigten Baugruppen oder Einzelteile insbesondere sehr viele Fügerichtungen notwendig. Als besonders problematisch erweist sich dabei die Montage der an dem Kommutator anliegenden Bürsten. Diese sind bei den bekannten Vorrichtungen an ringförmigen, die Motorwelle umgebenden Bürstenträgern befestigt. Da die Bürsten mit einer gewissen Andruckkraft an dem Kommutator anliegen müssen, ist es bei der Montage der Bürsten erforderlich, diese etwas in Radialrichtung nach außen zu schieben und in dieser Position zu halten, um so die Motorwelle zusammen mit dem Kommutator bei zurückgeschobenen Bürsten in die Öffnung einführen zu können. Diese aufwendige Montagemethode erfordert nicht nur einiges Geschick, sondern ist insbesondere auch hinsichtlich einer maschinellen Montage der elektrischen Antriebseinheit hinderlich.

Der Erfindung liegt daher die Aufgabe zugrunde, eine elektrische Antriebseinheit der gattungsgemäßen Art derart weiterzubilden, daß sie einen möglichst einfachen Aufbau aufweist und hierdurch eine möglichst einfache Montage möglichst weniger Teile oder vorgefertigter Baugruppen ermöglicht wird.

### Vorteile der Erfindung

Diese Aufgabe wird bei einer elektrischen Antriebseinheit der eingangs beschriebenen Art durch die kennzeichnenden Merkmale des Patentanspruchs 1 gelöst.

Die Öffnung in dem Getriebegehäuse, durch die der Kohlebürsten tragende Bürstenträger radial über den Kommutator schiebbar ist, hat den besonders großen Vorteil, daß sämtliche Bürsten mittels des Bürstenträgers simultan radial auf den Kommutator geschoben werden, wodurch eine seitliche Montage der Kohlebürsten, insbesondere auch zusammen mit der seitlichen Montage der Getriebeelemente erfolgen kann. Darüber hinaus ermöglicht eine derartige Befestigung der Kohlebürsten auch eine einfache Demontage, beispielsweise bei abgenutzten Kohlebürsten. Von besonderem Vorteil ist es auch, daß zur Montage der kompletten Antriebseinrichtung lediglich noch zwei Fügerichtungen notwendig sind, nämlich eine in Axialrichtung der Motorwelle und eine senkrecht zur Axialrichtung der Motorwelle.

Hinsichtlich einer sehr einfachen Montage ist es besonders vorteilhaft, daß die Öffnung in dem Getriebegehäuse angeordnet und zusammen mit diesem durch den Getriebedeckel verschließbar ist.

Im Hinblick auf eine einfache Montage ist vorgesehen , daß der Bürstenträger an dem Getriebedeckel befestigbar und zusammen mit diesem montierbar ist. Auf diese Weise können nicht nur auf die oben beschriebene Weise sämtliche elektrischen Schaltelemente einschließlich der Entstörelemente, sondern gleichzeitig auch die Bürsten in einem Schritt zusammen mit dem Getriebedeckel montiert werden.

Um insbesondere eine drehzahlabhängige Ansteuerung des Antriebsmotors zu ermöglichen, ist bei einer vorteilhaften Ausführungsform vorgesehen, daß in der Öffnung ein an der Motorwelle befestigter Ringmagnet angeordnet ist, dessen Drehstellung von Magnetsensoren erfaßt wird, die auf an der Getriebedeckelinnenseite befestigten Leiterplatten angeordnet sind. Aufgrund dieser Anordnung können die Magnetsensoren auf einfache Weise montiert und präzise auf den Ringmagneten ausgerichtet werden, wodurch eine exakte Erfassung der Drehstellung der Welle des Antriebsmotors auf einfache Weise ermöglicht wird.

Insbesondere hinsichtlich einer sehr einfachen Montage der elektrischen Schaltelemente ist bei einer vorteilhaften Ausführungsform vorgesehen, daß an der Innenseite des Getriebedeckels elektrische Schaltelemente befestigt sind, die mittels eines Stanzgitters durch Schweißverbindungen oder mittels einer Leiterplatte durch Lötverbindungen untereinander elektrisch leitend verbunden und zusammen mit dem Getriebedeckel montierbar sind.

Auf diese Weise können sämtliche elektrischen Schaltelemente vorab an der Innenseite des Getriebedeckels montiert und die elektrischen Kontakte mit dem Antriebsmotor sodann durch Montage des Getriebedeckels hergestellt werden.

Vorzugsweise umfassen die elektrischen Schaltelemente auch Entstörelemente, wie zum Beispiel Entstörspulen, Entstörkapazitäten und andere Entstörbauelemente, wie Dioden, Transistoren o.dgl., die bei montiertem Getriebedeckel in eigens für sie vorgesehenen Taschen in dem Getriebegehäuse angeordnet sind.

Was die Ausbildung des Bürstenträgers betrifft, wurden bislang noch keine näheren Angaben gemacht. Eine vorteilhafte Ausführungsform sieht vor, daß der Bürstenträger eine im wesentlichen halbmondförmige Trägerplatte aufweist, an der die Bürsten jeweils um gleiche Winkel zueinander versetzt derart radial federnd befestigt sind, daß die beiden äußersten Bürsten einen Winkel einschließen, der kleiner als 180° ist.

Um im montierten Zustand immer am Kommutator anzuliegen und um kleine Unebenheiten des Kommutators und Abnutzungen der Kohlebürsten auszugleichen, ist vorteilhafterweise vorgesehen, daß die Bürsten in Führungen entgegen der Rückstellkraft einer Feder verschieblich angeordnet sind. Diese federnde Anordnung der Bürsten ermöglicht darüber hinaus auf sehr vorteilhafte Weise ein einfaches Aufschieben der auf dem Kommutator angeordneten Bürsten auf den Bürstenträger.

Um insbesondere einen guten Kontakt der Bürsten an dem Kommutator sicherzustellen, ist vorteilhafterweise vorgesehen, daß die Bürsten an ihrer dem Kommutator zugewandten Seite eine auf den Kommutator angepaßte abgerundete Andruckfläche aufweist, die im montierten Zustand der Bürsten an dem Kommutator anliegen.

Um eine einfache Montage der Bürsten durch Aufschieben der an dem Bürstenträger angeordneten Bürsten zu ermöglichen, ist bei einer sehr vorteilhaften Ausführungsform vorgesehen, daß die Bürsten seitlich derart angeschrägt sind, daß beim Aufschieben auf den Kommutator eine möglichst große, der Rückstellkraft der Feder entgegengesetzte resultierende Kraft entsteht.

Auf diese Weise werden die Bürsten besonders gut entgegen der Rückstellkraft der Feder in den Führungen zurückgeschoben. Gleichzeitig entstehen möglichst geringe Kraftanteile senkrecht zu dieser resultierenden Kraft, welche eine Reibung verursachen.

### Zeichnung

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: schematisch in Explosionsdarstellung eine erfindungsgemäße Antriebseinheit;
- Fig. 2: eine Draufsicht eines Getriebedeckels der in Fig. 1 dargestellten erfindungsgemäßen elektrischen Antriebseinheit;
- Fig. 3a, 3b, 3c: verschiedene Montagestufen eines Bürstenträgers einer erfindungsgemäßen Antriebseinheit und
- Fig. 4a, 4b: schematisch die Kräfteverhältnisse beim Montieren des Bürstenträgers in den in Fig. 4a und 4b gezeigten Montagestufen.

### Beschreibung der Ausführungsbeispiele

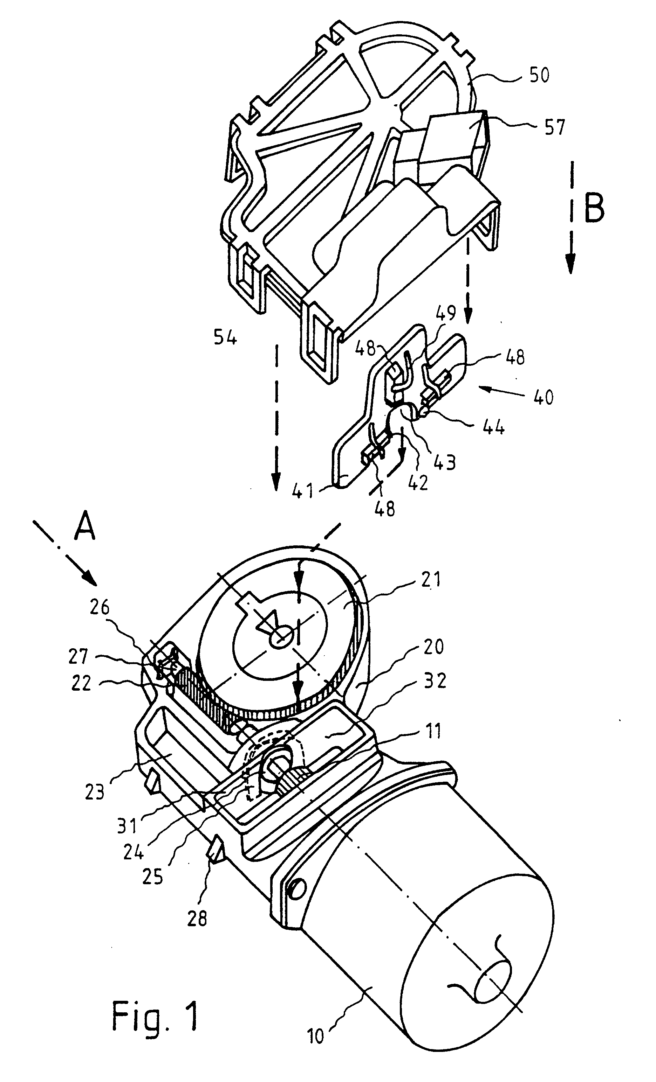

Eine elektrische Antriebseinheit für Scheibenwischer eines Kraftfahrzeugs, dargestellt in Fig. 1, umfaßt ein Polgehäuse 10, in dem Permanentmagnete und eine auf einer Ankerwelle drehbar angeordnete Ankerwicklung sowie gegebenenfalls ein auf der Ankerwelle angeordneter Ringmagnet und weitere an sich bekannte Teile eines Elektromotors untergebracht sind (nicht dargestellt).

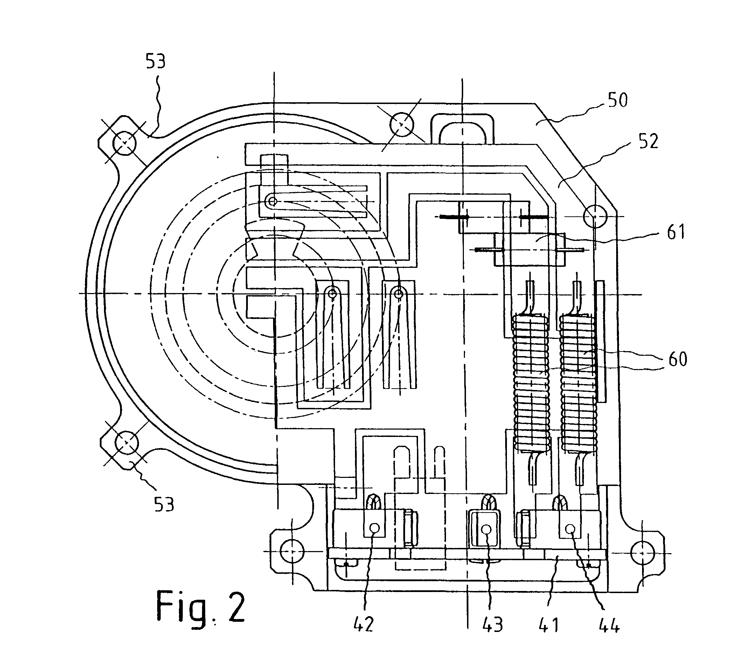

Stirnseitig an das Polgehäuse 10 ist ein im wesentlichen topfförmiges Getriebegehäuse 20 an einem Flansch befestigt. In dem Getriebegehäuse 20 sind Getriebeelemente, nämlich ein Zahnrad 21, das in eine mit der Ankerwelle des Antriebsmotors verbundene Schnecke 22 eingreift, angeordnet. Das Getriebegehäuse 20 weist auf seiner dem Polgehäuse 10 zugewandten Seite eine Öffnung 31 auf, durch die der Kommutator 11 frei zugänglich angeordnet ist. In dem Getriebegehäuse 20 ist ferner benachbart zur Schnecke 22 eine Tasche 23 vorgesehen, in der Entstörelemente 60, 61, die an einem Getriebedeckel 50 befestigt sind (siehe Fig. 2), im montierten Zustand des Getriebedeckels 50 angeordnet sind.

Wie aus Fig. 1 des weiteren hervorgeht, ist ein Kugellager 24, beispielsweise wie dargestellt in einer in dem Getriebegehäuse 20 angeordneten Wand 32 zur Lagerung der Motorwelle vorgesehen. Das Kugellager 24 ist in an sich bekannter Weise durch Sicherungsklammern 25 gesichert.

Die mit der Schnecke 22 versehene Motorwelle ist an ihrer der Schnecke 22 zugewandten Seite durch eine Blattfeder 26 vorgespannt, die auf einen am Ende der Schnecke 22 angeordneten sogenannten Anlaufpilz 27 drückt und hierdurch zum einen eine axial spielfreie Lagerung der Ankerwelle, zum anderen eine definierte Vorspannung des Kugellagers 24 ermöglicht.

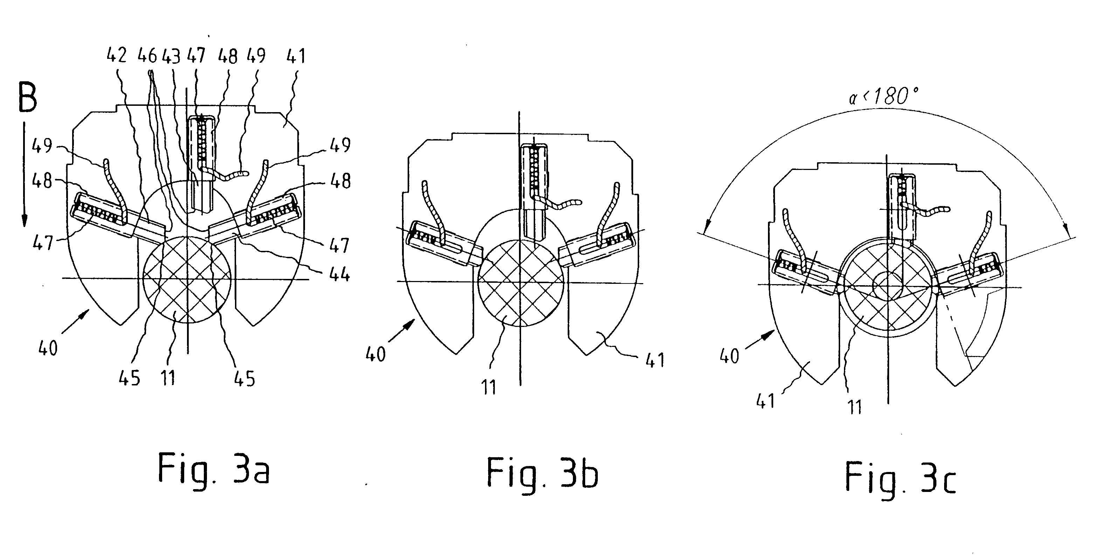

Durch die Öffnung 31 in dem Getriebegehäuse 20 kann ein als Ganzer mit 40 bezeichneter Bürstenträger zusammen mit den an ihm befestigten Bürsten 42, 43, 44 in radialer Richtung auf den Kommutator 11 geschoben werden, wobei sich die Bürsten 42, 43, 44 in radialer Richtung entgegen der Rückstellkraft von Rückstellfedern 47 (Fig. 3) zurückschieben und im eingesteckten Zustand auf die Außenfläche des Kommutators 11 gedrückt werden.

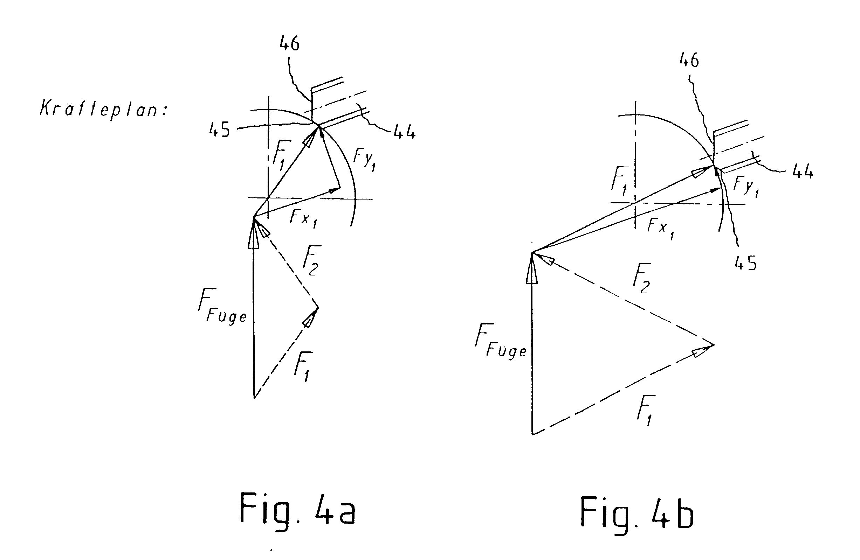

Verschiedene Stufen der Montage eines derartigen Bürstenträgers 40 sind in den Fig. 3a, 3b und 3c schematisch dargestellt. Die Kräfteverhältnisse der in Fig. 3a dargestellten Montagestufe sind in Fig. 4a schematisch dargestellt, wohingegen die Kräfteverhältnisse der in Fig. 3b dargestellten Montagestufe in Fig. 4b schematisch dargestellt sind.

Wie aus Fig. 3 hervorgeht, sind die Kohlebürsten 42, 43, 44 auf einer im wesentlichen halbmondförmigen Trägerplatte 41 im Winkel zueinander versetzt angeordnet. Die beiden äußersten Bürsten 42, 44 schließen einen Winkel ein, der kleiner als 180° ist. Die Bürsten 42, 43, 44 sind in Führungen 48 entgegen der Rückstellkraft der Rückstellfedern 47 federnd gelagert, so daß sie beim Aufschieben des Bürstenträgers 40 auf den Kommutator 11 in den Führungen 48 zurückgeschoben und im montierten Zustand durch die Federkraft der Federn 47 an den Kommutator 11 gepreßt werden. Die Bürsten 42, 43, 44 weisen an ihrer Unterseite auf den Kommutator 11 angepaßte angerundete Andruckflächen 46 auf, die im montierten Zustand an dem Kommutator 11 anliegen und diesen formschlüssig umgeben.

Sie sind des weiteren seitlich derart angeschrägt, daß beim Aufschieben auf den Kommutator 11 eine möglichst große, der Rückstellkraft der Feder 47 entgegengesetzte resultierte Kraft F1 entsteht (siehe Fig. 4). Die Schrägen 45 weisen ebenfalls eine zylinderförmige Gestalt auf.

Wie in Fig. 3a dargestellt ist, wird der Bürstenträger 40 derart in Fügerichtung B auf den Kommutator 11. aufgeschoben, daß zunächst die Schrägen 45 der beiden äußersten Kohlebürsten 42, 44 an dem Kommutator 11 zur Anlage kommen. In Fig. 4a sind die hierbei auftretenden Kräfteverhälnisse dargestellt. Die Fügekraft FFüge setzt sich aus zwei Komponenten F1 und F2 zusammen. F1 ist die resultierende Kraft, die auf die Kohlebürste in ihrer Führung 48 wirkt. Diese setzt sich zusammen aus zwei Anteilen Fx1 und Fy1, wobei Fx1 parallel zur Führungsrichtung und Fy1 senkrecht zur Führungsrichtung gerichtet sind. Fx1 ist demnach die Kraft, die eine Verschiebung der Kohlebürsten 42, 44 in den Führungen 48 hervorruft, wohingegen Fy1 unerwünschte Reibungskräfte in den Führungen 48 hervorruft.

Bei weiterem Aufschieben des Bürstenträgers 40 (vergl. Fig. 3b, Fig. 4b) werden die Kohlebürsten 42, 44 aufgrund der Schrägen 45 in ihren Führungen 48 entgegen der Rückstellkraft der Federn 47 verschoben, wobei in diesem Falle der Hauptanteil der resultierenden Kraft F1 in entgegengesetzter Richtung zur Rückstellkraft der Rückstellfeder 47 wirkt, wohingegen der Reibungskräfte verursachende Anteil Fy1 deutlich kleiner ist.

Bei weiterem Aufschieben des Bürstenträgers 40 auf den Kommutator 11 kommt schließlich die zwischen den beiden äußersten Kohlebürsten 42, 44 angeordnete Kohlebürste 43 genauso wie die beiden äußersten Kohlebürsten 42, 44 mit ihrer Andruckfläche zur Anlage an dem Kommutator 11 und wird aufgrund der Rückstellkraft der Feder 47 an den Kommutator 11 gedrückt.

Von besonderem Vorteil ist, daß bei einer derartigen Montage des Bürstenträgers 40 ein Zurückschieben und Festhalten der Bürsten 42, 43, 44 im zurückgeschobenen Zustand nicht erforderlich ist.

Der Bürstenträger 40 ist, wie in Fig. 1 schematisch dargestellt, vorzugsweise auf der Innenseite des Getriebedeckels 50 befestigt und über mit den Bürsten 42, 43, 44 verbundene Anschlußlitzen 49 mit an der Innenseite des Getriebedeckels 50 angeordneten Schaltungen (nicht dargestellt) elektrisch leitend verbunden.

Wie insbesondere aus Fig. 2 hervorgeht, sind an der Innenseite des Getriebedeckels 50 ferner sämtliche elekrischen Anschlußelemente, beispielsweise die Entstördrosseln 60 und weitere Entstörelemente 61 angeordnet, die über ein Stanzgitter 52 miteinander und mit anderen Schaltungsteilen (nicht dargestellt) durch Schweißverbindungen verdrahtet sind.

So können an der Innenseite des Getriebedeckels 50 beispielsweise elektronische Schaltungen vorgesehen sein (nicht dargestellt), die der Ansteuerung des Antriebsmotors dienen. Diese Schaltungen können insbesondere auch mit weiteren elektrischen Schaltelementen zusammenwirken, die auf der der Schnecke 22 zugewandten Seite des Kommutators 11 an der Ankerwelle 11 angeordnet sind. So kann beispielsweise auf der Ankerwelle 11 ein (nicht dargestellter) Ringmagnet angeordnet sein, der mit Magnetsensoren, z.B. Hallsonden, die an der Innenseite des Getriebedeckels 50 angeordnet sind, zusammenwirken. Diese Hallsonden können beispielsweise Teil einer elektronischen Schaltung sein, die die Drehstellung der Welle des Antriebsmotors erfaßt. Der Getriebedeckel 50 wird beispielsweise durch Schnapphaken 54, die mit an dem Getriebegehäuse 20 angeordneten Rastelementen 28 zusammenwirken oder, wie in Fig. 2 gezeigt, durch Schraubverbindungen, die an dafür vorgesehenen Flanschen 53 an dem Getriebedeckel 50 und in entsprechender Weise an dem Getriebegehäuse 20 angeordnet sind, befestigt. An dem Getriebedeckel 50 können des weiteren Aufnahmen 57 für Anschlußstecker oder Anschlußbuchse vorgesehen sein.

Die Montage der in Fig. 1 und Fig. 2 dargestellten elektrischen Antriebseinheit erfolgt entlang der beiden durch Pfeile A und B dargestellten Fügerichtungen auf die nachfolgend beschriebene Weise. Zunächst wird der Anker in das Polgehäuse 10 eingesetzt, sodann wird das Getriebegehäuse 20 mit der in ihm ausgebildeten Öffnung 31 stirnseitig an dem Polgehäuse 10 befestigt (Fügerichtung A), daraufhin wird der Anker axial mit einem Haltebügel gesichert und das Längsspiel des Ankers mit einer Spannfeder eingestellt. In Fügerichtung B wird der Bürstenträger 40, das Zahnrad und der Getriebedeckel 50 montiert.

Es sind zur Montage der Antriebseinheit daher lediglich noch die beiden Fügungsrichtungen A und B erforderlich. Insbesondere kann die Montage der Bürsten 42, 43, 44 auf dem Kommutator 11 genau so wie die Montage des Getriebezahnrads 21 und des Getriebedeckels 50 in radialer Richtung erfolgen, so daß ein umständliches Einführen des Kommutators 11 in den Bürstenträger 40 in Axialrichtung vollständig entfallen kann.

## Patentansprüche

1. Elektrische Antriebseinheit, insbesondere für Scheibenwischer eines Kraftfahrzeugs, umfassend einen Antriebsmotor mit einem in einem im wesentlichen topfförmigen Motor- oder Polgehäuse (10) untergebrachten Anker, ein im wesentlichen topfförmiges Getriebegehäuse (20) zur Aufnahme von Getriebeelementen (21, 22), welches stirnseitig an dem Motorgehäuse (10) befestigt und durch einen Getriebedeckel (50) verschließbar ist und eine in dem Getriebegehäuse (20) vorgesehene verschließbare Öffnung (31), durch die ein Kohlebürsten (42, 43, 44) tragender Bürstenträger (40) in radialer Richtung über den Kommutator (11) des Antriebsmotors schiebbar ist, **dadurch gekennzeichnet, daß** die Öffnung (31) in dem Getriebegehäuse (20) zusammen mit diesem durch den Getriebedeckel (50) verschließbar ist und der Bürstenträger (40) an dem Getriebedeckel (50) befestigbar und zusammen mit diesem montierbar ist.

2. Antriebseinheit nach Anspruch 1, **dadurch gekennzeichnet, daß** in der Öffnung (31) ein an einer Motorwelle befestigter Ringmagnet angeordnet ist, dessen Drehstellung von Magnetsensoren erfaßt wird, die auf an der Getriebedeckelinnenseite befestigten Schaltungen angeordnet sind.

3. Antriebseinheit nach einem der Ansprüche 1 oder 2 **dadurch gekennzeichnet, daß** an einer Innenseite des Getriebedeckels (50) elektrische Schaltelemente befestigt sind, die mittels eines Stanzgitters (52) oder einer Leiterplatte miteinander elektrisch leitend verbunden und zusammen mit dem Getriebedeckel (50) montierbar sind.

4. Antriebseinheit nach Anspruch 3, **dadurch gekennzeichnet, daß** die elektrischen Schaltelemente Entstörelemente (60, 61) umfassen, die in dafür vorgesehenen Aufnahmetaschen (23) des Getriebegehäuses (20) im montierten Zustand untergebracht sind.

5. Antriebseinheit nach Anspruch 1, **dadurch gekennzeichnet, daß** der Bürstenträger (40) eine im wesentlichen halbmondförmige Trägerplatte (41) aufweist, an der die Bürsten (42, 43, 44) zueinander winkelversetzt derart angeordnet sind, daß die beiden äußersten Bürsten (42, 44) einen Winkel einschließen, der kleiner als 180° ist.

6. Antriebseinheit nach Anspruch 5, **dadurch gekennzeichnet, daß** die Bürsten (42, 43, 44) in Führungen (48) entgegen der Rückstellkraft einer Feder (47) verschieblich angeordnet sind.

7. Antriebseinheit nach Anspruch 5 oder 6, **dadurch gekennzeichnet, daß** die Bürsten (42, 43, 44) an ihrer dem Kommutator (11) zugewandten Seite eine auf den Kommutator (11) angepaßte abgerundete Andruckfläche (46) aufweisen.

8. Antriebseinheit nach einem der Ansprüche 5 bis 7, **dadurch gekennzeichnet, daß** die Bürsten (42, 43, 44) seitlich derart angeschrägt sind, daß beim Aufschieben auf den Kommutator (11) eine möglichst große, der Rückstellkraft der Feder (47) entgegengesetzte resultierende Kraft (F1) entsteht.

9. Antriebseinheit nach Anspruch 8, **dadurch gekennzeichnet, daß** die Schräge (45) eine zylinderförmige Gestalt aufweist.

## Claims

1. Electric drive unit, in particular for windscreen wipers of a motor vehicle, comprising a drive motor with an armature accommodated in an essentially pot-shaped motor or pole casing (10), an essentially pot-shaped gear-mechanism casing (20) for holding gear-mechanism elements (21, 22) which is attached to the end of the motor casing (10) and can be closed by a gear-mechanism lid (50), and a closeable opening (31) which is provided in the gear-mechanism casing (20) and through which a brush carrier (40) which is fitted with carbon brushes (42, 43, 44) can be pushed in the radial direction over the commutator (11) of the drive motor, **characterized in that** the opening (31) in the gear-mechanism casing (20) can be closed together with the latter by means of the gear-mechanism lid (50), and the brush carrier (40) can be attached to the gear-mechanism lid (50) and mounted together with it.

2. Drive unit according to Claim 1, **characterized in that** a ring magnet attached to a motor shaft is arranged in the opening (31), the rotary position of said ring magnet being sensed by magnet sensors which are arranged on circuits attached to the inner side of the gear-mechanism lid.

3. Drive unit according to one of Claims 1 or 2, **characterized in that** electrical switching elements are attached to an inner side of the gear-mechanism lid (50), said switching elements being electrically conductively connected to one another by means of a punched grid (52) or a printed circuit board and being capable of being mounted together with the gear-mechanism lid (50).

4. Drive unit according to Claim 3, **characterized in that** the electrical switching elements comprise interference suppression elements (60, 61) which are accommodated in the mounted state in holding pockets (23) of the gear-mechanism casing (20) which are provided for this purpose.

5. Drive unit according to Claim 1, **characterized in that** the brush carrier (40) has a carrier plate (41) which is essentially half-moon shaped and on which the brushes (42, 43, 44) are arranged with angular offsets with respect to one another such that the two outermost brushes (42, 44) enclose an angle which is less than 180°.

6. The drive unit according to Claim 5, **characterized in that** the brushes (42, 43, 44) are arranged in guides (48) so as to be displaceable counter to the restoring force of a spring (47).

7. Drive unit according to Claim 5 or 6, **characterized in that** the brushes (42, 43, 44) have, on their side facing the commutator (11), a rounded contact face (46) which is adapted to the commutator (11).

8. Drive unit according to one of Claims 5 to 7, **characterized in that** the brushes (42, 43, 44) are laterally bevelled in such a way that when they are pushed onto the commutator (11) the greatest possible resulting force (Fl) which is opposed to the restoring force of the spring (47) is produced.

9. Drive unit according to Claim 8, **characterized in that** the bevel (45) is of cylindrical shape.

## Revendications

1. Unité d'entraînement électrique, notamment d'essuieglace de véhicule automobile, comprenant un moteur avec un boîtier polaire ou de moteur (10) essentiellement en forme de pot logeant un induit, un carter de transmission (20) essentiellement en forme de pot pour recevoir des éléments de transmission (21, 22), ce carter étant fixé par la face frontale contre le boîtier (10) du moteur et se fermant par un couvercle (50), ainsi qu'une ouverture (31) susceptible d'être fermée, prévue dans le carter (20) et à travers laquelle un support de balais (40) portant un balai en carbone (42, 43, 44) peut se glisser dans la direction radiale sur le commutateur (11) du moteur,
**caractérisée en ce que**
l'ouverture (31) du carter (20) ainsi que celui-ci peuvent être fermés par le couvercle de carter (50), et le support de balais (40) peut être fixé au couvercle de carter (50) et peut se monter avec celui-ci.

2. Unité d'entraînement selon la revendication 1,
**caractérisée en ce qu'**
un aimant annulaire fixé à l'arbre moteur est logé dans l'ouverture (31), pour détecter la position de rotation avec des capteurs magnétiques qui appartiennent à des circuits fixés sur le côté intérieur du couvercle du carter.

3. Unité d'entraînement selon l'une quelconque des revendications 1 ou 2,
**caractérisée en ce que**
des éléments de circuit électrique sont fixés sur le côté intérieur du couvercle de carter (50), ces éléments étant reliés électriquement par une grille estampée (52) ou un circuit imprimé et pouvant être montés ensemble avec le couvercle (50).

4. Unité d'entraînement selon la revendication 3,
**caractérisée en ce que**
les éléments de circuit électrique comprennent des éléments de déparasitage (60, 61) qui se logent à l'état monté dans des logements (23) qui leur sont destinés dans le carter de transmission (20).

5. Unité d'entraînement selon la revendication 1,
**caractérisée en ce que**
le support de balais (40) comporte une plaque de support (41) essentiellement en forme de demi-lune, sur laquelle sont montés les balais (42, 43, 44), avec décalage angulaire de façon que les deux balais extérieurs (42, 44) fassent entre eux un angle inférieur à 180°.

6. Unité d'entraînement selon la revendication 5,
**caractérisée en ce que**
les balais (42, 43, 44) sont montés coulissants dans des moyens de guidage (48) contre la force de rappel développée par un ressort (47).

7. Unité d'entraînement selon l'une quelconque des revendications 5 ou 6,
**caractérisée en ce que**
les balais (42, 43, 44) ont une surface d'application (46) arrondie, adaptée au commutateur (11) sur leur côté tourné vers le commutateur (11).

8. Unité d'entraînement selon l'une quelconque des revendications 5 à 7,
**caractérisée en ce que**
les balais (42, 43, 44) sont inclinés latéralement de façon que lorsqu'ils sont engagés sur le commutateur (11), on a une force résultante (F1) aussi grande que possible qui s'oppose à la force de rappel des ressorts (47).

9. Unité d'entraînement selon la revendication 8,
**caractérisée en ce que**
la surface inclinée (45) a une forme cylindrique.
